Europäisches Patentamt

European Patent Office

Office européen des brevets

(19)

(11) Veröffentlichungsnummer : **0 441 770 A2**

(12)
# EUROPÄISCHE PATENTANMELDUNG

(21) Anmeldenummer : 91890020.0

(22) Anmeldetag : 31.01.91

(51) Int. Cl.$^5$ : **G01N 9/22, F02D 41/14**

(30) Priorität : 09.02.90 AT 301/90

(43) Veröffentlichungstag der Anmeldung :
**14.08.91 Patentblatt 91/33**

(84) Benannte Vertragsstaaten :
**BE CH DE DK ES FR GB IT LI NL SE**

(71) Anmelder : **AVL Gesellschaft für
Verbrennungskraftmaschinen und
Messtechnik mbH.Prof.Dr.Dr.h.c. Hans List
Kleiststrasse 48
A-8020 Graz (AT)**

(72) Erfinder : **Wöss, Gerhard, Dipl.-Ing.
Hans-Riehl Gasse 12 a
A-8043 Graz (AT)**

(74) Vertreter : **Klein, Adam, Dipl.Ing. et al
Patentanwälte Dipl.Ing. Adam Klein, Dipl.Ing.
Rudolf Pinter, Fasangasse 49
A-1030 Wien (AT)**

(54) **Dichte-Messeinrichtung.**

(57) Zur einfachen und mechanisch robusten Bestimmung bzw. Überwachung der Dichte von Flüssigkeiten, insbesonders , von zum Antrieb einer Brennkraftmaschine dienendem Kraftstoff, ist ein in der zu untersuchenden Flüssigkeit eingetauchter Auftriebskörper (1) vorgesehen, dessen Auftrieb über eine mittels einer Feder (5) aufgebrachte Belastung ausbalanciert ist. Zwischen dem Auftriebskörper (1) einerseits und dem die Feder (5) haltenden und mit der zu untersuchenden Flüssigkeit gefüllten Gehäuse (7) andererseits ist eine vom Auftrieb und damit von der Dichte der zu untersuchenden Flüssigkeit abhängigen Kapazität (C1,C2) gebildet, die über eine Schaltungsanordnung (4) überwacht wird.

Fig.1

EP 0 441 770 A2

## DICHTE-MEßEINRICHTUNG

Die Erfindung betrifft eine Meßeinrichtung zur Bestimmung der Dichte von Flüssigkeiten, mit einem in der zu untersuchenden Flüssigkeit eingetauchten Auftriebskörper von bekanntem spezifischem Gewicht, dessen Auftrieb über eine Belastungseinrichtung mit progressiv wirkender Gegenkraft ausbalanciert ist und mit einer Meßanordnung für die vertikale Position des Auftriebskörpers, welche eine entsprechend dieser Position in ihrem Kapzitätswert veränderliche Kapazität und eine Anordnung zur Überwachung dieses, als Maß für die Dichte dienenden Kapazitätswertes aufweist.

Meßeinrichtungen zur Dichtebestimmung von Flüssigkeiten, die unter Ausnutzung des Auftriebes eines Meßkörpers arbeiten, sind beispielsweise in Form des Aräometers bzw. auch der Mohr-Westphal'schen Waage bekannt und erlauben unter Ausnutzung des Archimedischen Prinzips relativ einfache und genaue Dichtebestimmungen unter bestimmten standardisierten Voraussetzungen. Probleme bereiten bei den bekannten Ausführungen der genannten Geräte einerseits die Ablesung bzw. Weiterverwertung der Meßresultate und andererseits Messungen an Flüssigkeiten, deren Dichte sich zeitabhängig ändert, sodaß beispielsweise die Messung von strömenden Flüssigkeiten, deren Dichteänderung über der Zeit überwacht werden soll, nicht oder nur mit unverhältnismäßig großem Aufwand möglich ist.

Um Dichteänderungen im wesentlichen kontinuierlich und auch an einer zumindest mit einer gewissen Strömungsrate strömenden Flüssigkeit bestimmen zu können, ist beispielsweise gemäß der SU-A-765 705 eine auftriebsabhängig arbeitende Meßeinrichtung der eingangs genannten Art so ausgestaltet worden, daß die zu untersuchende Flüssigkeit einen Probenbehälter von unten nach oben durchströmt, wobei der in die Flüssigkeit eingetauchte Auftriebskörper über einen Aufhängedraht mit einer außerhalb des Probenbehälters angeordneten Belastungseinrichtungseinrichtung ausbalanciert ist. Während der Aufhängedraht unabhängig von der auftriebsabhängigen Stellung des Auftriebskörpers mit gleichbleibendem Radius zum Drehpunkt der Belastungseinrichtung geführt ist, ist die Aufhängung eines Gegengewichtes an der Belastungseinrichtung so ausgeführt, daß der wirksame Hebelarm mit größer werdender Eintauchtiefe des Auftriebskörpers linear zunimmt, sodaß dieser mit seiner vertikalen Stellung in der Flüssigkeit unmittelbar ein Maß für die jeweilige Dichte der Flüssigkeit gibt. Abgesehen von einer Skalenablesung kann bei diesem bekannten Gerät auch über einen mit der Belastungseinrichtung verstellten Drehkondensator bzw. dessen Kapazität die jeweilige Dichte ermittelt werden.

Weiters ist beispielsweise aus DE-A1-36 32 019 eine Einrichtung zur Messung der Dichte bekannt, bei der eine Meßspindel in eine Meßkammer eintaucht, wobei unterhalb der Meßspindel ein Näherungsschalter angebracht ist, der ein der Dichte der Flüssigkeit proportionales analoges Signal abgibt.

Mit derartigen Geräten ist nun zwar eine kontinuierliche Überwachung der Dichte auch von strömenden Flüssigkeiten möglich, wobei sich aber der Nachteil ergibt, daß die mechanische Ausführung mit über eine lange, frei pendelnde Aufhängung aufgehängtem Auftriebskörper und Belastungsgewicht, bzw. schwimmender Meßspindel große Sorgfalt bei der Durchführung der Messung bzw. bei der Stabilisierung der gesamten Meßeinrichtung erfordert, sodaß insbesonders für genauere Dichtebestimmungen nur die stationäre Verwendung einer entsprechend stabil ausgestalteten Meßeinrichtung sinnvoll ist. Die gleichen Nachteile bestehen im übrigen auch hinsichtlich der eingangs genannten früher bekannten Varianten von unter Ausnutzung des Archimedischen Prinzips arbeitenden Dichtemeßgeräten, sodaß gewisse, heutzutage wesentliche Anwendungen von Dichtemessungen an Flüssigkeiten mit den genannten bekannten Geräten nicht wahrgenommen werden können.

So ist insbesonders in den letzten Jahren die kontinuierliche Überwachung bzw. Bestimmung der Dichte des beispielsweise einer Verbrennungskraftmaschine zugeführten Kraftstoffes wesentlich geworden, da diese zusätzlich als Parameter bei elektronisch geregelten Einspritzsystemen verwendet werden kann. So wird etwa in den nördlichen Ländern Europas spezifisch leichterer Kraftstoff als in den südlichen Ländern verwendet. Ebenso gibt es üblicherweise einen Dichteunterschied zwischen sogenannten Sommer- und Winterkraftstoffen. Legt man nun beispielsweise die sogenannte Blockiermenge (entspricht "Vollgas") so aus, daß die jeweilige Verbrennungskraftmaschine bei leichtem Kraftstoff ihre volle Leistung erbringt, so wird sie bei schwerem Kraftstoff rußen und umgekehrt. Über eine Dichteüberwachung könnte man die maximale Einspritzmenge an den jeweils im Tank befindlichen Kraftstoff anpassen. Zur Mitnahme und zum Betrieb beispielsweise in einem Lastkraftwagen sind aber die genannten bekannten Anordnungen aus den erwähnten Gründen nicht geeignet.

Es ist nun zwar vor einiger Zeit ein elektronisches Dichtemeßgerät bekannt geworden, bei dem die zu untersuchende Flüssigkeit in ein im wesentlichen U-förmig gebogenes Glasrohr gesaugt wird, welches zu mechanischen Schwingungen im kHz-Bereich angeregt als Resonator dient. Die Resonanzfrequenz ist sodann ein Maß für die Dichte der im Glasrohr befindlichen Flüssigkeit. Obwohl eine derartige Meßeinrichtung prinzipiell natürlich auch in einem Kraftfahrzeug oder dergleichen mitgeführt und zur Dichteüberwachung des zum Antrieb dienenden Kraftstoffes verwendet werden könnte, ist doch der wesentliche Nachteil gegeben, daß nicht nur der mechanische Aufbau des Resonatorrohres (Toleranzen) und die Schwingungsanregung und Auswertung aufwendig sind, sondern daß zumeist auch eine separate Pumpe für die Durchsaugung des zu untersuchenden Kraftstoffes durch die Meßeinrichtung nötig wäre, was insgesamt insbesonders für die Massenanwendung beispielsweise in Serien-PkW's hohe Mehrkosten verursachen würde und damit wirtschaftlich nicht vertretbar ist.

Ausgehend von den obigen Überlegungen stellt sich die vorliegende Erfindung die Aufgabe, eine einfache Meßeinrichtung der eingangs genannten Art so auszubilden, daß die genannten Nachteile der bekannten derartigen Einrichtung vermieden werden und daß insbesonders auf kostengünstige und damit auch für den Masseneinsatz geeignete Weise die Dichte von Flüssigkeiten auch unter relativ rauhen mechanischen Umgebungsbedingungen, wie wechselnden Beschleunigungen, Vibrationen und dergleichen, zuverlässig überwacht werden kann.

Dies wird gemäß der vorliegenden Erfindung dadurch erreicht, daß die Belastungseinrichtung eine am Auftriebskörper angreifende Feder aufweist, die an einem den Auftriebskörper und die Feder umschließenden und mit der zu untersuchenden, elektrisch nichtleitenden Flüssigkeit gefüllten Gehäuse befestigt ist, und daß die Kapazität einerseits vom Auftriebskörper und andererseits vom Gehäuse gebildet ist. Damit ist nun der Auftriebskörper samt Belastungseinrichtung (darunter ist hier stets die die Gegenkraft zum Auftrieb bereitstellende Einrichtung zu verstehen) einerseits und veränderlicher Kapazität zur Überwachung der Stellung des Auftriebskörpers andererseits in dem auch die zu untersuchende Flüssigkeit enthaltenden Gehäuse untergebracht, was einen sehr kompakten und robusten Aufbau der Meßeinrichtung ergibt. Alle beweglichen Teile sind somit vollständig von der zu untersuchenden Flüssigkeit umgeben, was eine hervorragende Dämpfung ergibt - darüber hinaus kann der Auftriebskörper in bevorzugter Ausgestaltung aber zur Dämpfung unerwünschter Bewegungen bedarfsweise auch mit Dämpfungsflügeln versehen sein. Die gesamte Anordnung ist äußerst kostengünstig herstellbar und kann beispielsweise im Bereich des Auslasses des Kraftstofftanks eines Kraftwagens oder dergleichen angeordnet und vom zu untersuchenden Kraftstoff durchströmt sein.

In bevorzugter Ausgestaltung der Erfindung ist vorgesehen, daß die Feder von einer Blattfeder gebildet ist, und daß das Gehäuse einen die Blattfeder haltenden Trägerkörper aufweist, der die Blattfeder samt Auftriebskörper U-förmig umgreift und im Bereich einer am Auftriebskörper angeordneten, eine Elektrode der Kapazität bildenden, leitenden Fahne zumindest eine Gegenelektrode aufweist. Dies ergibt eine konstruktiv sehr einfache und mechanisch robuste Ausgestaltung, bei der die beweglichen Teile vom sie umgebenden Gehäuse optimal geschützt sind. Dieses kann dann beispielsweise auch unmittelbar an geeigneter Stelle im Kraftstofftank angeordnet sein.

Im letztgenannten Zusammenhang ist nach besonders bevorzugter weiterer Ausbildung der Erfindung vorgesehen, daß der Trägerkörper an seiner Außenseite mit einer feingelochten Abdeckung, vorzugsweise einem feinmaschigen, elektrisch leitenden Gitter, umgeben ist. Es ist damit ein ständiger Austausch bzw. ein Durchströmen der zu untersuchenden Flüssigkeit ermöglicht und gleichzeitig sichergestellt, daß Wellenbewegungen oder von sonstigen äußeren Umständen bedingte größere Strömungsgeschwindigkeiten in der zu untersuchenden Flüssigkeit keine Auswirkungen auf die Bewegung bzw. Stellung des Auftriebskörpers haben können. Gleichzeitig wird eine Verschmutzung durch schwebende Partikel in der zu untersuchenden Flüssigkeit vermieden und eine elektrische Abschirmung der veränderlichen Kapazität bewirkt.

Am Gehäuse bzw. am Trägerkörper können in weiterer Ausgestaltung der Erfindung zwei Gegenelektroden der Kapazitäten angeordnet sein, deren Differenz in den Kapazitätswerten als Maß für die Dichte bestimmbar ist. Damit wird die Dichtebestimmung auf die empfindlichere Bestimmung einer Kapazitätswertdifferenz rückgeführt, was auf einfachste Weise eine Erhöhung der Meßgenauigkeit erlaubt.

Die Feder der Belastungseinrichtung kann nach einer anderen Ausgestaltung der Erfindung von einer Schraubenfeder gebildet sein, die im oberen Bereich des Gehäuses aufgehängt ist und den Auftriebskörper trägt, wobei der die Gegenelektrode der Kapazität bildende Boden des bis auf Zu- und Ablauf für die zu untersuchende Flüssigkeit geschlossenen Gehäuses als Kugelkalotte mit Mittelpunkt in der Aufhängung der Schraubenfeder ausgebildet ist. Mit dieser Ausgestaltung ist die Meßgenauigkeit der Einrichtung auf einfache Weise auch innerhalb der üblichen Längs- und Querneigungen beispielsweise von Kraftfahrzeugen - wie etwa Personenkraftwagen - gewährleistet, da sich der Abstand des Auftriebskörpers vom die Gegenelektrode der Kapazität bildenden Boden auch bei Längs- oder Querneigung der eingebauten Meßeinrichtung nicht ändert.

Der Zulauf der zu untersuchenden Flüssigkeit kann bei der oben genannten Ausgestaltung vorzugsweise im Bodenbereich des Gehäuses, vorzugsweise tangential ausgerichtet, angeordnet sein, wobei der Ablauf im obersten Bereich des Gehäuses liegt. Auf diese Weise können sich keine die veränderliche Kapazität bzw. auch die Stellung des Auftriebskörpers direkt beeinflussenden Luftblasen im Gehäuse bilden bzw. halten. Wegen des großen Strömungsquerschnittes im unteren Bereich des Gehäuses ist die Zufließgeschwindigkeit darüber hinaus so klein, daß der pendelnd aufgehängte Auftriebskörper durch die Strömung nicht gestört werden kann.

Nach einer besonders bevorzugten weiteren Ausbildung der Erfindung kann bei der zuletzt genannten Ausgestaltung auch vorgesehen sein, daß der Bodenbereich siebartig durchlässig ist und unmittelbar den Zulauf bildet, was ebenfalls positive Auswirkungen im Hinblick auf jede Vermeidung von störenden Bewegungen des Auftriebskörpers hat.

In besonders bevorzugter Ausgestaltung der Erfindung kann vorgesehen sein, daß eine relativ zum Gehäuse feststehende Kompensationselektrode zur Berücksichtigung der Abhängigkeit des gemessen Kapazitätswerts von der Dielektrizitätskonstante der zu untersuchenden Flüssigkeit im Gehäuse angeordnet und mit der Anordnung zur Kapazitätsüberwachung verbunden ist. Damit kann auch die unter Umständen beispielsweise mit der Kraftstoffdichte mitwechselnde Dielektrizitätskonstante bzw. deren Einfluß auf den gemessenen Kapazitätswert berücksichtigt werden.

Die Kapazität zwischen Auftriebskörper und Gehäuse ist in besonders bevorzugter Ausgestaltung der Erfindung Bestandteil einer rückgekoppelten, kapazitiven Brückenschaltung, was auf einfache Weise genaue Messungen des veränderlichen Kapazitätswertes und damit der zu bestimmenden Dichte erlaubt.

Zur Ausschaltung des Einflusses der Dieleketrizitätskonstante E der zu untersuchenden Flüssigkeit kann in weiterer Ausgestaltung der Erfindung in der die hinsichtlich ihres Kapazitätswertes veränderliche(n) Kapazität(en) enthaltenden Hälfte der Meßbrücke zumindest eine Kompensationskapazität angeordnet sein. Da die veränderliche Kapazität gemäß der Erfindung voll in der zu untersuchenden Flüssigkeit liegt, ist - wie erwähnt - ihr Wert nicht nur von der auftriebsabhängigen Auslenkung des Auftriebskörpers, sondern auch vom Wert E der untersuchten Flüssigkeit abhängig. Die Empfindlichkeit (Ausgangsspannungsdifferenz pro Dichtedifferenz) wäre damit bei einer Flüssigkeit mit höherem E-Wert größer. Durch die genannte, bedarfsweise auch mehrteilige, Kompensationskapazität läßt sich dieser Einfluß des E-Wertes ausschalten.

Gemäß einer weiteren Ausgestaltung der Erfindung kann die Kapazität zwischen Auftriebskörper und Gehäuse auch frequenzbeeinflussender Bestandteil einer Oszillatorschaltung sein, womit sich die zu ermittelnde bzw. überwachende Dichte aus der Frequenzverstimmung beobachten bzw. ableiten läßt.

Allen genannten Ausführungen der Erfindung gemeinsam ist die einfache und robuste Ausführung bzw. Ausgestaltung der Dichtemessung nach dem Archimedischen Prinzip, was insbesonders die kostengünstige Massenanwendung derart ausgebildeter Meßeinrichtungen beispielsweise zur laufenden Dichtemessung im Kraftstoff von in Fahrzeugen eingesetzten Brennkraftmaschinen ermöglicht.

Die Erfindung wird im folgenden noch anhand der in der Zeichnung dargestellten Ausführungsbeispiele näher erläutert.

Fig. 1 zeigt dabei eine teilweise aufgeschnittene Seitenansicht eines Teils der erfindungsgemäßen Meßeinrichtung,

Fig. 2 einen Schnitt entlang der Linie II-II in Fig. 1,

Fig. 3 einen teilweise schematischen Schaltplan eines Ausführungsbeispiels der bei der Anordnung nach Fig. 1 und 2 fehlenden Überwachungsanordnung für die hinsichtlich ihres Kapazitätswertes veränderliche Kapazität,

Fig. 3a ein Spannungsdiagramm zur Schaltung nach Fig. 3,

Fig. 4 einen Vertikalschnitt durch einen von der Funktion her dem Teil nach den Fig. 1 und 2 entsprechenden Teil einer anderen Ausführung der erfindungsgemäßen Meßeinrichtung und

Fig. 5 zeigt schließlich einen Schnitt entlang der Linie V-V in Fig. 4.

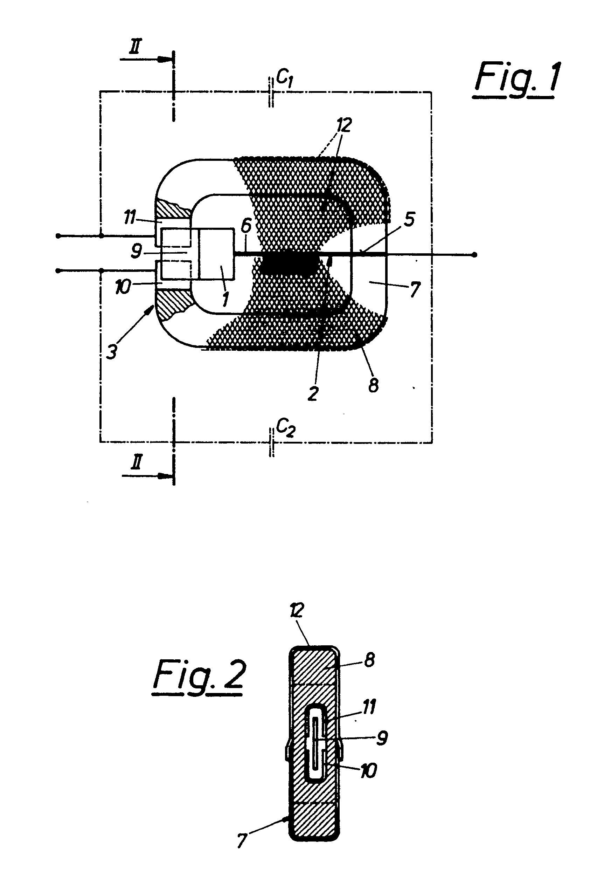

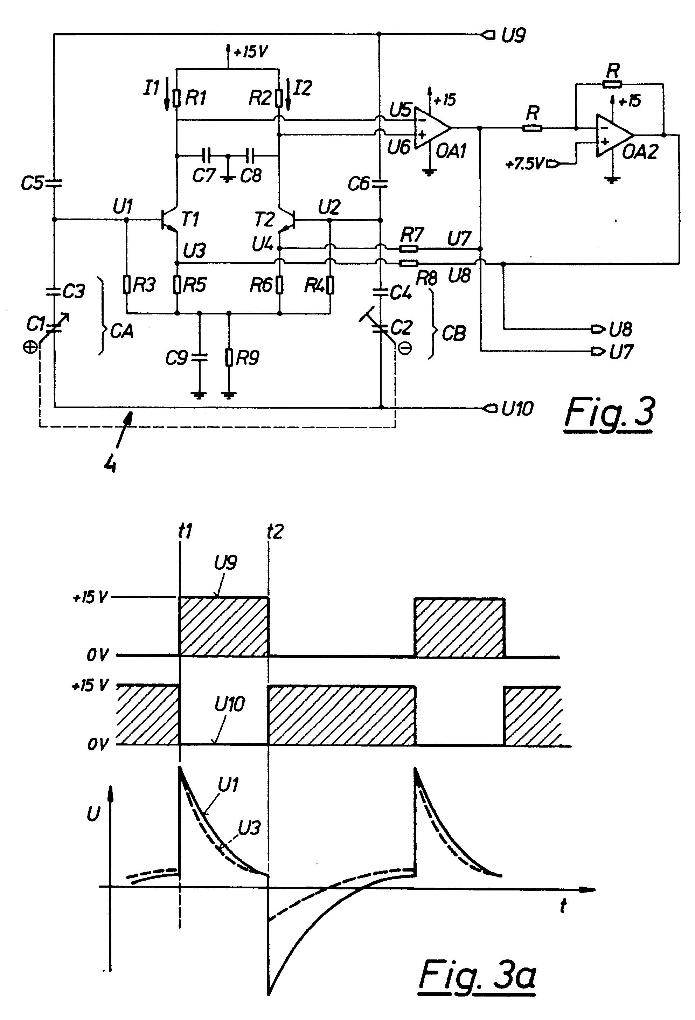

Die in ihrer Gesamtheit im wesentlichen in den Fig. 1 bis 3 dargestellte Meßeinrichtung zur Bestimmung der Dichte von Flüssigkeiten weist einen in der zu untersuchenden Flüssigkeit eingetauchten Auftriebskörper 1 von bekanntem spezifischem Gewicht, dessen Auftrieb (im eingebauten Zustand in der hier nicht dargestellten Flüssigkeit in der Zeichenebene vertikal nach oben wirkend) über eine Belastungseinrichtung 2 mit progressiv wirkender Gegenkraft ausbalanciert ist, sowie eine Meßanordnung 3 für die vertikale Position des Auftriebskörpers 1 auf. Die Meßanordnung 3 weist eine entsprechend der Position des Auftriebskörpers 1 in ihrem Kapazitätswert ($c_I$, $c_{II}$) veränderliche Kapazität C1, C2 (Differenzkapazität) und eine aus Fig. 3 ersichtliche Anordnung 4 zur Überwachung dieser, als Maß für die Dichte dienenden Kapazitätswerte $c_I$, $c_{II}$ auf.

Die Belastungseinrichtung 2 weist eine am Auftriebskörper 1 angreifende Feder 5 auf, die gemäß Fig. 1 von einer Blattfeder 6 gebildet und an einem den Auftriebskörper 1 und die Feder 5 umschließenden und mit der zu untersuchenden, elektrisch nichtleitenden Flüssigkeit gefüllten Gehäuse 7 befestigt ist. Das Gehäuse 7 weist einen die Blattfeder 6 haltenden Trägerkörper 8 auf, der die Blattfeder 6 samt Auftriebskörper 1 U-förmig umgreift und im Bereich einer am Auftriebskörper 1 angeordneten, eine Elektrode der Kapazität C1, C2 bildenden, leitenden Fahne 9 zwei Gegenelektroden 10, 11 aufweist. Die Kapazität C1, C2 ist damit einerseits vom Auftriebskörper 1 bzw. dessen Fahne 9 und andererseits vom Gehäuse 7 bzw. den Gegenelektroden 10, 11 in Form der Differenz zwischen den Kapazitätswerten $c_I$, $c_{II}$ der Kapazitäten C1 einerseits und C2 andererseits definiert und kann vorteilhaft über die in Fig. 3 dargestellte Schaltungsanordnung bestimmt werden, auf die untenstehend noch Bezug genommen wird.

Der Trägerkörper 8 des Gehäuses 7 ist an seiner Außenseite gemäß Fig. 1 mit einer fein gelochten Abdeckung 12 in Form eines feinmaschigen, elektrisch leitenden Gitters umgeben, sodaß insbesonders der den Auftriebskörper 1 und die Feder 5 aufnehmende Innenraum gegen Wellenbewegungen der zu untersuchenden Flüssigkeit geschützt ist, wobei trotzdem der stetige Austausch dieser Flüssigkeit gewährleistet bleibt. Aus Fig. 2 ist in diesem Zusammenhang zu ersehen, daß die Abdeckung 12 den elektrisch nichtleitenden Trägerkörper 8 vollständig umgibt, sodaß auch eine elektrische Abschirmung für die innenliegenden Gegenelektroden 10, 11 und die Fahne 9 bzw. die dadurch gebildeten Kapazitäten gegeben ist.

Ausgehend beispielsweise von der Verwendung einer dargestellten Anordnung zur Messung bzw. Überwachung der Dichte von Dieselkraftstoff, welche bei 15°C je nach Kraftstoffzusammensetzung zwischen 0,8 und 0,9 kg/l beträgt und außerdem temperaturabhängig ist, wird der Auftriebskörper 1 mit einem spezifischen Gewicht von 0,85 kg/l (= mittlere Dichte des Kraftstoffes) ausgeführt. Ist die Dichte des tatsächlich vorhandenen Kraftstoffes größer als 0,85 kg/l so wird die Feder 5 vom Auftriebskörper 1 nach oben ausgebogen, bei Dichtewerten kleiner als 0,85 nach unten. Damit ist die Federauslenkung ein Maß für die Dichte der Flüssigkeit.

Gemäß Fig. 3 sind die beiden Kapazitäten C1 und C2 Bestandteil einer rückgekoppelten kapazitiven Brückenschaltung, welche über einen nicht dargestellten Rechteckoszillator mit zwei gegengleichen Spannungen U9 und U10 versorgt ist.

Für die Brückenschaltung gilt :

C5 = C6 (z.B. 10pF)

C3 = C4 (z.B. 10pF)

Die Kapazitätswerte $c_I$, $c_{II}$ von C1 und C2 liegen in der Größenordnung von einigen pF, wobei C2 ein Trimmerkondensator ist.

Die Brücke liegt an den Rechteckspannungen U9 und U10 (Fig. 3a).

Die Wirkungsweise der Schaltung wird im folgenden mit Hilfe der Vorgänge beim Auftreten der Flanken dieser Rechteckspannungen erklärt :

Betrachtung symmetrischer Verhältnisse an der Brücke ($c_I = c_{II}$).

Bei völliger Symmetrie sind sämtliche Spannungen und Ströme in den beiden Brückenzweigen gleich, d.h. die mit C7 und C8 geglätteten Spannungen U5 und U6 sind gleich groß, ebenso sind U7 und U8 gleich groß und haben hier den Ruhewert von +7,5 V. Wegen der Symmetrie wird im folgenden nur der linke Teil der Brücke beschrieben.

Zum Zeitpunkt t1 hat U9 eine positive, U10 eine negative Flanke.

Wegen C5 > CA springt U1 in positive Richtung. Damit wird T1 leitend. Wegen der Entladung über R3 und die Basis von T1 nimmt U1 exponentiell ab. U3 folgt um die Basis-Emitterspannung verschoben. Entsprechend dieser Spannung U3 fließt ein ebenso abnehmbarer Emitterstrom, der sich auf R5 und R 8 aufteilt.

Zum Zeitpunkt t2 hat U9 eine negative, U10 eine positive Flanke. U1 wird negativ, T1 wird gesperrt.

Der zwischen t1 und t2 erzeugte Emitterstrom ergibt den Kollektorstrom, welcher über C7 geglättet wird und den Gleichstrom I1 bewirkt. Die Elemente der Schaltung sind so ausgelegt, daß U5 (und somit auch U6) im Aussteuerbereich von OA1 liegt.

Betrachtung unsymmetrischer Brücken-Kapazitäten C1 und C2.

Wird $c_I$ kleiner und $c_{II}$ größer, so steigt zum Zeitpunkt t1 die Spannung U1 gegenüber dem vorhin beschriebenen Wert. Damit werden der Emitterstrom und auch der Kollektorstrom größer, der über C7 geglättete Strom I1 wird ebenfalls größer als I2, wodurch an OA1 eine Eingangs-Differenzspannung anliegt. Sein AUsgang U7 wird negativer und wegen des Inverters OA2 wird U8 positiver. Dadurch wird über R8 das Emitterpotential von T1 angehoben, über R7 jenes von T2 abgesenkt. Der Emitterstrom von t1 wird dadurch verringert, jener von T2 vergrößert. Wegen der hohen Leerlaufverstärkung von OA1 werden U7 und U8 so lange verändert, bis die gemittelten Ströme I1 und I2 wieder gleich groß sind und die Brücke somit wieder einen stabilen Zustand erreicht.

Die für diesen stabilen Zustand erforderliche Spannungsdifferenz zwischen U7 und U8 ist ein Maß für die Kapazitätsdifferenz zwischen $c_I$ und $c_{II}$ und repräsentiert somit die Position des Auftriebskörpers. Das Nutzsignal ist die Spannungsdifferenz zwischen U7 und U8, wobei kleinste Kapazitätsänderungen in große Spannungshübe umgesetzt werden.

Die Kondensatoren C3 und C4 verringern den Einfluß der Dielektrizitätskonstante E der zu messenden Flüssigkeit, also etwa des zu messenden Kraftstoffes. Da die Kapazitäten C1 und C2 bei der dargestellten Ausführung voll in diesem zu untersuchenden Kraftstoff liegen, ist ihr Wert nicht nur von der Auslenkung des Auftriebskörpers sondern auch vom Wert E des Kraftstoffes abhängig. Damit wäre die Empfindlichkeit (Ausgangsspannungsdifferenz pro Dichtedifferenz) bei Kraftstoff mit höherem E-Wert größer. Es läßt sich nachweisen, daß bei einem bestimmten Wert von C3 gleich C4 der Einfluß von E verschwindet.

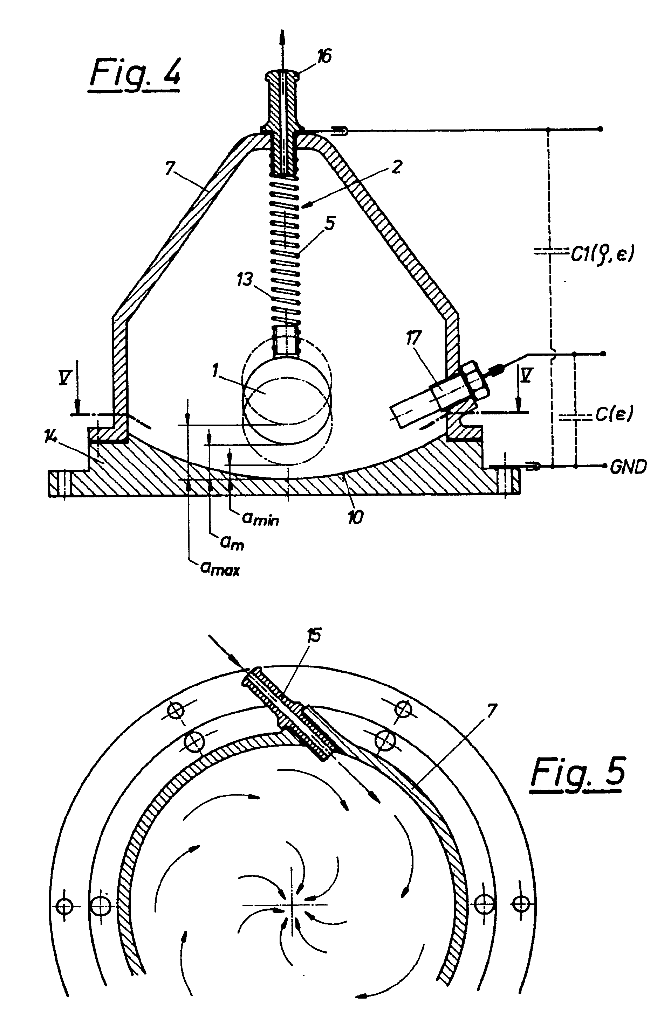

Die Anordnung nach den Fig. 4 und 5 unterscheidet sich insofern von der von der Funktion her entsprechenden Anordnung nach den Fig. 1 und 2, als nun die Feder 5 von einer Schraubenfeder 13 gebildet, im oberen Bereich des Gehäuses 7 aufgehängt ist und den Auftriebskörper 1 trägt, und daß der die Gegenelektrode 10 der Kapazität C1 bildende Boden 14 des bis auf Zu- und Ablauf 15, 16 für die zu untersuchende Flüssigkeit geschlossenen Gehäuses 7 als Kugelkalotte mit Mittelpunkt in der Aufhängung der Schraubenfeder 13 ausgebildet ist. Der Zulauf 15 der zu untersuchenden Flüssigkeit ist im Bodenbereich des Gehäuses 7 tangential ausgerichtet angeordnet ; der Ablauf 16 liegt im obersten Bereich des Gehäuses 7. Damit ist sichergestellt, daß auch bei seitlichen Schrägstellungen und Auslenkungen eines eine derartige Meßeinrichtung tragenden Fahrzeuges oder dergleichen zufolge des gleichbleibenden Abstandes zwischen Auftriebskörper 1 und Gegenelektrode 10 am Boden 14 der Kapazitätswert der Kapazität C1 gleichbleibt und damit nicht fälschlicherweise eine Dichteänderung angezeigt wird.

Mit 17 ist schließlich in Fig. 4 eine relativ zum Gehäuse 7 feststehende Kompensationselektrode bezeichnet, welche eine Berücksichtigung der Abhängigkeit des Kapazitätswertes der Kapazität C1 von der Dielektrizitätskonstante der zu untersuchenden Flüssigkeit im Gehäuse 7 erlaubt und ebenfalls mit der Anordnung zur Kapazitätsüberwachung (z.B. gemäß Fig. 3) verbunden ist. Die damit gegen Erde (GND) definierte Kapazität ist in Fig. 4 mit C bezeichnet.

Abgesehen von der Darstellung gemäß Fig. 4 und 5 könnte der Boden 14 statt mit tangentialem Zufluß 15 auch unmittelbar siebartig ausgebildet sein und direkt den Zulauf für die zu untersuchende Flüssigkeit von unten her bilden. Weiters könnten, falls erforderlich, die Auftriebskörper 1 in beiden besprochenen Ausführungsvarianten auch zusätzlich mit Dämpfungsflügeln versehen sein, damit unerwünschte Bewegungen ausgeschaltet oder weiter minimiert werden können.

**Patentansprüche**

1. Meßeinrichtung zur Bestimmung der Dichte von Flüssigkeiten, mit einem in der zu untersuchenden Flüssigkeit eingetauchten Auftriebskörper von bekanntem spezifischem Gewicht, dessen Auftrieb über eine Belastungseinrichtung mit progressiv wirkender Gegenkraft ausbalanciert ist und mit einer Meßanordnung für die vertikale Position des Auftriebskörpers, welche eine entsprechend dieser Position in ihrem Kapazitätswert veränderliche Kapazität und eine Anordnung zur Überwachung dieses, als Maß für die Dichte dienenden Kapazitätswertes aufweist, **dadurch gekennzeichnet**, daß die Belastungseinrichtung (2) eine am Auftriebskörper (1) angreifende Feder (5) aufweist, die an einem den Auftriebskörper (1) und die Feder (5) umschließenden und mit der zu untersuchenden, elektrisch nichtleitenden Flüssigkeit gefüllten Gehäuse (7) befestigt ist, und daß die Kapazität (C1,C2) einerseits vom Auftriebskörper (1) und andererseits vom Gehäuse (7) gebildet ist.

2. Meßeinrichtung nach Anspruch 1, dadurch gekennzeichnet, daß die Feder (5) von einer Blattfeder (6) gebildet ist, und daß das Gehäuse (7) einen die Blattfeder (6) haltenden Trägerkörper (8) aufweist, der die Blattfeder (6) samt Auftriebskörper (1) U-förmig umgreift und im bereich einer am Auftriebskörper (1) angeordneten, eine Elektrode der Kapazität (C1,C2) bildenden, leitenden Fahne (9) zumindest eine Gegenelektrode (10,11) aufweist.

3. Meßeinrichtung nach Anspruch 2, dadurch gekennzeichnet, daß der Trägerkörper (8) an seiner Außenseite mit einer feingelochten Abdeckung (12), vorzugsweise einem feinmaschigen, elektrisch leitenden Gitter, umgeben ist.

4. Meßeinrichtung nach einem der Ansprüche 1 bis 3, dadurch gekennzeichnet, daß am Gehäuse (7) bzw. am Trägerkörper (8) zwei Gegenelektroden (10,11) der Kapazitäten (C1,C2) angeordnet sind, deren Differenz in den Kapazitätswerten ($c_I$, $c_{II}$) als Maß für die Dichte bestimmbar ist.

5. Meßeinrichtung nach Anspruch 1, dadurch gekennzeichnet, daß die Feder (5) von einer Schraubenfeder (13) gebildet ist, die im oberen bereich des Gehäuses (7) aufgehängt ist und den Auftriebskörper (1) trägt, und daß der die Gegenelektrode (10) der Kapazität (C1) bildende boden (14) des bis auf Zu- und Ablauf (15,16) für die zu untersuchende Flüssigkeit geschlossenen Gehäuses (7) als Kugelkalotte mit Mittelpunkt in der Aufhängung der Schraubenfeder (13) ausgebildet ist.

6. Meßeinrichtung nach Anspruch 5, dadurch gekennzeichnet, daß der Zulauf (15) der zu untersuchenden Flüssigkeit im Bodenbereich des Gehäuses (7), vorzugsweise tangential ausgerichtet, angeordnet ist, und daß der Ablauf (16) im obersten bereich des Gehäuses (7) liegt.

7. Meßeinrichtung nach Anspruch 5, dadurch gekennzeichnet, daß der Bodenbereich (14) siebartig durchlässig ist und unmittelbar den Zulauf (15) bildet.

8. Meßeinrichtung nach einem der Ansprüche 1 bis 7, dadurch gekennzeichnet, daß eine relativ zum Gehäuse (7) feststehende Kompensationselektrode (17) zur Berücksichtigung der Abhängigkeit des gemessenen Kapazitätswertes ($c_I$, $c_{II}$) von der Dielektrizitätskonstante (E) der zu untersuchenden Flüssigkeit im Gehäuse (7) angeordnet und mit der Anordnung zur Kapazitätsüberwachung (4) verbunden ist.

9. Meßeinrichtung nach einem der Ansprüche 1 bis 8, dadurch gekennzeichnet, daß die Kapazität (C1,C2) zwischen Auftriebskörper (1) und Gehäuse (7) Bestandteil einer rückgekoppelten, kapazitiven Brückenschaltung ist.

10. Meßeinrichtung nach Anspruch 9, dadurch gekennzeichnet, daß zur Ausschaltung des Einflusses der Dielektrizitätskonstante (E) der zu untersuchenden Flüssigkeit in der die hinsichtlich ihres Kapazitätswertes ($c_I$, $c_{II}$) veränderliche(n) Kapazität(en) (C1,C2) enthaltenden Hälfte der Meßbrücke zumindest eine Kompensationskapazität (C3,C4) angeordnet ist.

11. Meßeinrichtung nach einem der Ansprüche 1 bis 8, dadurch gekennzeichnet, daß die Kapazität (C1, C2) zwischen Auftriebskörper (1) und Gehäuse (7) frequenzbeeinflussender Bestandteil einer Oszillatorschaltung ist.

12. Meßeinrichtung nach einem der Ansprüche 1 bis 11, dadurch gekennzeichnet, daß zur Dämpfung unerwünschter Bewegungen der Auftriebskörper mit Dämpfungsflügeln versehen ist.

*Fig.1*

*Fig.2*

*Fig.3*

*Fig.3a*

_Fig. 4_

_Fig. 5_